# EUROPEAN PATENT APPLICATION

(11) **EP 3 590 677 A1**
(43) Date of publication of application: **08.01.2020**
(21) Application number: 18181545.7
(22) Date of filing: 03.07.2018
(51) Int. Cl.: B29C 45/14, B32B 15/09, B29K 67/00, B29K 705/00, C08L 67/00

(54) **POLYMER-METAL JUNCTION**

(71) Applicant: Solvay Specialty Polymers USA, LLC, Alpharetta, Georgia 30005-3914 (US)
(72) Inventor: DAVIS, Raleigh L., Alpharetta, Georgia 30005 (US); EL-HIBRI, Mohammad Jamal, Alpharetta, GA 30350 (US); GAUTAM, Keshav S., Duluth, Georgia 30097 (US); GOPALAKRISHNAN, Vijay, Dunwoody, GA 30350 (US)
(74) Representative: Benvenuti, Federica

(57) **Abstract**

A polymer-metal junction includes a polyester polymer composition in contact with a structured metal surface of a metal substrate. The polyester polymer composition includes a naphthalate polyester and optionally at least one reinforcing filler. Methods of making the polymer-metal junction, and shaped articles including the polymer-metal junction are also described.

## Description

### FIELD OF THE INVENTION

The present invention generally relates to the field of polymer-metal junctions and methods of making the polymer-metal junctions, where the polymer-metal junction includes a polyester polymer composition including a naphthalate polyester and optionally a reinforcing filler.

### BACKGROUND

Etched metal substrates are widely used to achieve improved metal-plastic bonding as compared metal substrates lacking etched surfaces. The etching process works by texturing the surface of the metal surface, and then over-molding a molten plastic on the surface such that the plastic has sufficient time to flow into the textured surface of the metal substrate before vitrification and/or crystallization of the polymer occurs. The mold used in the over-molding process is heated to a temperature less than the temperature of the plastic that is introduced into the mold to control the cooling of the plastic and allow for vitrification and/or crystallization of the plastic to occur. Nevertheless, to achieve adequate bonding using semi-crystalline materials, it has been shown that the mold temperature must be greater than 40°C (and up to 60°C) above the glass transition temperature (Tg) of the polymer. This is especially true when the technology used to texture the surface of the metal substrate is nano-molding technology (NMT), a process used to create nano-sized pores in the surface of the metal substrate. The requirement to use a mold temperature greater than 40°C increases manufacturing costs, excludes certain substrates that are unable to withstand elevated temperatures (e.g. >150°C), and, in some cases, limits the types of molding machines that can be employed.

To address some of these limitations, attempts have been made to use low-T_{g} polymers, such as polybutylene therepthalate (PBT) (T_{g} about 60°C); however, such materials have limited thermal and chemical resistance, leading to cosmetic defects, and, in some cases, premature part failure, especially when they are exposed, for example, to anodization processes commonly used in the mobile electronic device industry.

Accordingly, a need exists for polymer compositions that adheres well to textured metal substrates when over-molded on a metal substrate at temperatures less than about 150°C, and which also provide good thermal and chemical resistance properties.

### DETAILED DESCRIPTION OF PREFERRED EMBODIMENTS

Described herein is a polymer-metal junction including a polyester polymer composition in contact with a structured metal surface (described below) of a metal substrate. The polyester polymer composition includes a naphthalate polyester and, optionally, at least one reinforcing filler. Also described herein are methods of making the polymer-metal junction and shaped articles including the polymer-metal junction.

It was surprisingly discovered that the polyester polymer compositions exhibited excellent adhesion to structured metal surfaces, even when manufactured using mold temperatures ranging from 10 to 40°C greater than the glass transition temperatures (T_{g}) of the polyester polymer compositions. Indeed, for the polymer-metal junctions of the invention, adhesion strength between polyester polymer composition and metal substrate was surprisingly found to be essentially insensitive to mold temperature over this temperature range.

The methods of making the polymer-metal junction described herein are especially advantageous because they allow for bonding of high T_{g} materials (e.g. about 120°C) at cooler mold temperatures than the expected mold temperatures of greater than 40°C above the Tg of the polyester polymer composition. This results in greater energy efficiency, faster cycle times, and increased processing flexibility. In addition, naphthalate polyesters are semi-crystalline polyesters that exhibit a combination of mechanical properties, chemical resistance, and cosmetic properties making them particularly suitable for use in, for example, mobile electronic devices, where durability, colorability, surface finish, and resistance to anodizing processes are paramount.

### Polymer-Metal Junction and Method of Making

As will be described in more detail below, the polymer metal junction of the invention includes a polyester polymer composition in contact with a structured metal surface of a metal substrate.

As used herein, "structured metal surface" means a metal surface that has undergone an etching process to roughen the metal surface by removing at least a portion of the metal from the metal surface. Examples of structured metal surfaces include laser-etched metal surfaces and chemically-etched metal surfaces.

In some aspects, the structured metal surface is a nano-structured metal surface. As used herein, a "nano-structured metal surface" means a metal surface that has been etched to have a nano-pitted surface, where the average depth, height and width of the pits as measured by electron microscopy ranges from 10 to 1000 nm, preferably from 30 to 800 nm, and more preferably from 50 to 500 nm. In some embodiments, the metal substrate includes an NMT-treated surface. As used herein, an "NMT-treated metal surface" means a nano-structured surface prepared by any etching process described in EP1459882 B1, EP1559542 A1, or WO 2011123790 A1, the disclosures of which are incorporated herein by reference in their entireties.

The metal substrate is preferably copper, steel, aluminum, or a combination thereof. Aluminum is most preferred.

In some embodiments, the polymer layer has an average thickness of at most 5 mm, preferably at most 3 mm, 2 mm, 1 mm 0.5 mm.

The polymer-metal junction is made by contacting a structured metal surface, preferably a nano-structured metal surface, most preferably an NMT-treated metal surface of the metal substrate with the polyester polymer composition as described herein. For example, the polyester polymer composition may be over-molded onto the metal substrate using any suitable molding method. Preferably the polymer-metal junction is made by injection molding the polyester polymer composition onto a structured metal surface, preferably a nano-structured metal surface, most preferably an NMT-treated metal surface of the metal substrate.

As discussed above, it was discovered that the polyester polymer compositions unexpectedly exhibit excellent adhesive strength, even when molded at relatively low mold temperatures (e.g. 10 to 40°C) above the glass transition temperature (T_{g}) of the polyester polymer composition.

As used herein, the "glass transition temperature (T_{g})" means the glass transition temperature (T_{g}) as measured by differential scanning calorimetry (DSC) according to ASTM D3418.

Thus, in some embodiments, the mold temperature used in the overmolding process to make the polymer-metal junction ranges from 1 to 40°C, preferably 1 to 35°C, 1 to 30°C, 1 to 25°C, 1 to 20°C, 1 to 15°C, 1 to 10°C, 1 to 5°C, or 5 to 40°C, preferably 5 to 35°C, 5 to 30°C, 5 to 25°C, 5 to 20°C, 5 to 15°C, 5 to 10°C, or 10 to 40°C, preferably 10 to 35°C, 10 to 30°C, 10 to 25°C, 10 to 20°C, 10 to 15°C, greater than the T_{g} of the polyester polymer composition.

Furthermore, in some embodiments, the polyester polymer composition, the metal substrate, or both, are not heated to a temperature exceeding 150°C during molding.

The polymer-metal junction may exhibit an adhesive strength between the polyester polymer composition and the metal substrate, measured at 10°C greater than the T_{g} of the polyester polymer composition as described in the Examples, of at least 20 MPa, preferably at least 25 MPa, 27 MPa, 29 MPa.

### Polyester Polymer Composition and Method of Making

As will be described in more detail below, the polyester polymer composition includes a naphthalate polyester, optionally at least one reinforcing filler, and optionally one or more additional additives.

The polyester polymer composition can be made by methods well known to the person of skill in the art. For example, such methods include, but are not limited to, melt-mixing processes. Melt-mixing processes are typically carried out by heating the polymer components above the melting temperature of the thermoplastic polymers thereby forming a melt of the thermoplastic polymers. In some embodiments, the processing temperature ranges from 290°C to 320°C. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of polyester polymer composition, the components of the polyester polymer composition, e.g. the naphthalate polyester, the optional reinforcing filler, and any optional additives, are fed to the melt-mixing apparatus and melt-mixed in the apparatus. The components may be fed simultaneously as a powder mixture or granule mixture, also known as dry-blend, or may be fed separately.

The order of combining the components during melt-mixing is not particularly limited. In one embodiment, the component can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

### Naphthalate Polyester

As used herein, the term "naphthalate polyester" denotes a polymer comprising, relative to the total number of repeat units in the polymer, at least 50 mol% of repeat units (R_{NP}) of formula : 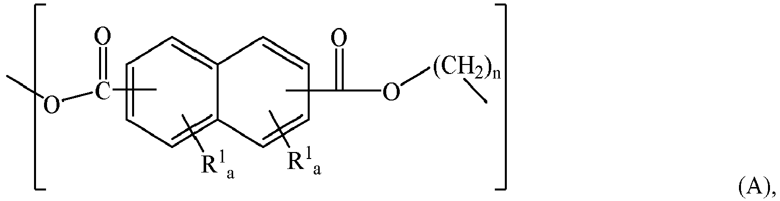 where each R¹ is independently selected at each occasion from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium.

Each a is independently selected at each occasion from integers ranging from 0 to 4. Preferably each a is zero.

n is selected from integers ranging from 2 to 6. Preferably, n is 2 or 4, most preferably 2.

In some embodiments, repeat units (R_{NP}) are selected from repeat units of formula : 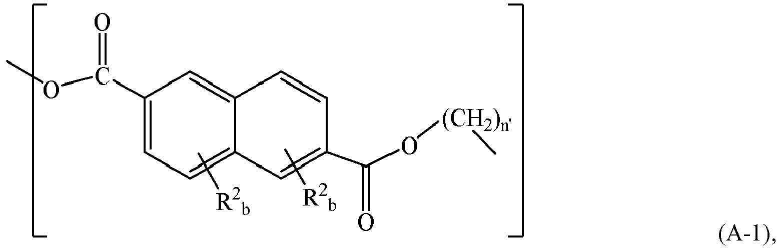 where each R² and each b is independently selected at each occasion from the groups described above for R¹ and a, respectively, and n' is selected from the same integers as n in Formula (A).

Preferably, each b in formula (A-1) above is zero, and the naphthalate polyester is a polyester of formula: 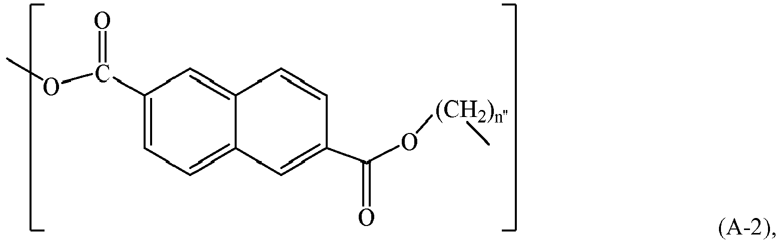 where n" is selected from the same integers as n in Formula (A).

In some embodiments, n is 4 in Formula (A-2), and the naphthalate polyester is a polybutylene naphthalate (PBN) of formula:

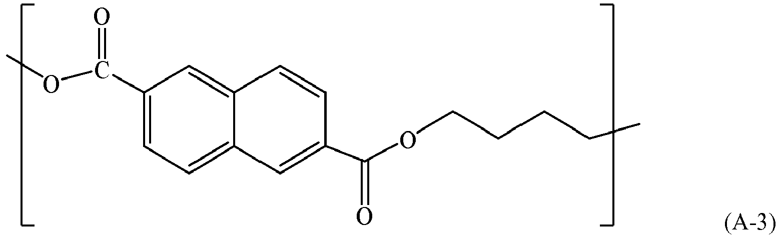

In some embodiments, n is 2 in Formula (A-2), and the naphthalate polyester is a polyethylene naphthalate (PEN) of formula:

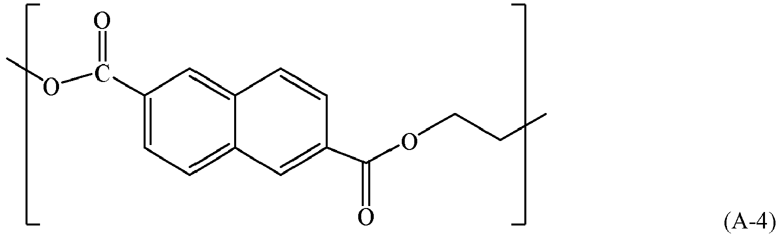

Most preferably, the naphthalate polyester is PEN.

Repeat units (R_{NP}) preferably represent at least 60 mol %, preferably at least 70 mol %, 80 mol %, 90 mol %, 95 mol %, and most preferably at least 99 mol % of repeat units in the naphthalate polyester.

In some aspects, the naphthalate polyester has a melt flow ranging from 1 to 50 m³/10min as measured by ISO1183 at 300°C and 1.2 kg_{f}.

The naphthalate polyester preferably exhibits an inherent viscosity measured according to ASTM D5225 ranging from 0.35 to 1.0, preferably from 0.4 to 0.8.

The naphthalate polyester is present in an amount ranging from 1 to 100 wt. %, preferably from 50 to 90 wt. %, preferably from 60 to 80 wt. %, more preferably from 65 to 75 wt. %, based on the weight of the polyester polymer composition.

The naphthalate polyester is preferably present in the polyester polymer composition in an amount of at least 1 wt. %, preferably at least 50 wt. %, 60%, 65 wt.%, 70 wt.%, based on the total weight of the polyester polymer composition.

The naphthalate polyester is preferably present in the polyester polymer composition in an amount of not more than 95 wt. %, preferably not more than 90 wt.%, 80 wt.%, 75 wt. %, based on the total weight of the polyester polymer composition.

### Optional Reinforcing Filler

The polyester polymer composition optionally includes at least one reinforcing filler. The reinforcing fillers can be selected from one or more fibrous fillers, particulate fillers, or a combination thereof. Fibrous fillers are preferred.

As used herein a "fibrous filler" is a material having a length, width and thickness, where the average length is significantly larger than both the width and thickness. Preferably, such a material has an aspect ratio, defined as the average ratio between the length and the smallest of the width and thickness of at least 5. Preferably, the aspect ratio of the reinforcing fibers is at least 10, more preferably at least 20, still more preferably at least 30.

In some embodiments, the fibrous filler is selected from at least one of glass fiber, carbon fiber, synthetic polymeric fiber, aramid fiber, aluminum fiber, titanium fiber, magnesium fiber, boron carbide fiber, rock wool fiber, and steel fiber. Glass fiber is most preferred.

In some embodiments, the fibrous reinforcing filler is glass fiber. Glass fibers may have a round cross-section or a non-circular cross-section (so called "flat glass fibers"), including oval, elliptical or rectangular. The glass fibers may be added as continuous fibers or as chopped glass fibers. The glass fibers have generally an equivalent diameter of 5 µm to 20 µm preferably of 5 µm to 15 µm and more preferably of 5 µm to 10 µm. All glass fiber types, such as A, C, D, E, M, S, R, T glass fibers (as described in chapter 5.2.3, pages 43-48 of Additives for Plastics Handbook, 2nd ed, John Murphy), or any mixtures thereof or mixtures thereof may be used; however, E- and S-glass fibers are most preferred.

In some embodiments, the polyester polymer composition includes at least one particulate filler. Preferably, the particulate filler is selected from talc, mica, titanium dioxide, kaolin, calcium carbonate, calcium silicate, and magnesium carbonate.

The reinforcing filler is preferably present in the polyester polymer composition, in an amount of at least 10 wt. %, more preferably at least 15 wt. %, based on the total weight of the polyester polymer composition.

The reinforcing filler is also preferably present in the polyester polymer composition in an amount of at most 50 wt. %, more preferably at most 40 wt. %, based on the total weight of the polyester polymer composition.

In some aspects, the amount of the reinforcing filler (preferably glass fiber) ranges from 0 wt. % to 50 wt. %, preferably from 10 wt. % to 50 wt. %, 10 wt. % to 40 wt. %, 15 wt. % to 35 wt. %, 20 wt. % to 35 wt. %, 25 wt. % to 35 wt. %, 28 wt. % to 32 wt. %, based on the total weight of the polyester polymer composition. Most preferably, the amount of the reinforcing filler is about 30 wt. % based on the total weight of the polyester polymer composition.

### Optional Additives

The polyester polymer composition may further include at least one optional additives selected from the group consisting of zinc sulfide, zinc oxide, ultraviolet light stabilizers, heat stabilizers, antioxidants such as organic phosphites and phosphonites, acid scavengers, processing aids, nucleating agents, lubricants, flame retardants, smoke-suppressing agents, anti-static agents, anti-blocking agents, and carbon black.

When one or more optional additives are present, their total concentration is preferably less than 10 wt. %, more preferably less than 5 wt. %, and most preferably less than 2 wt. %, based on the total weight of polyester polymer composition.

### Shaped Articles Including the Polymer-Metal Junction

Exemplary embodiments also include shaped articles comprising the polymer-metal junction.

The polymer-metal junction may be well suited for the manufacture of articles useful in a wide variety of applications. For example, the high adhesive strength to metals and chemical resistance of the polyester polymer composition makes the polymer-metal junction especially suitable for use in mobile electronic devices, especially in structural components for mobile electronic devices (e.g., framework or housing).

The term "mobile electronic device" is intended to denote any electronic device that is designed to be conveniently transported and used in various locations while exchanging/providing access to data, e.g. through wireless connections or mobile network connection. Representative examples of mobile electronic devices include mobile phones, personal digital assistants, laptop computers, tablet computers, radios, cameras and camera accessories, watches, calculators, music players, global positioning system receivers, portable games, hard drives and other electronic storage devices, and the like.

Exemplary embodiments will now be described in the following nonlimiting examples.

### EXAMPLES

The following examples illustrate the NMT metal adhesion performance of different polymer compounds as a function of mold temperature, T_{mold}, relative to the glass transition temperature of the resin, T_{g}.

### Materials

AvaSpire® PAEK available from Solvay Specialty Polymers USA, LLC.

Susteel® SGX-115 is a polyphenylenesulfone (PPS) polymer available from Tosoh.

Teonex® TN-8065S is a polyethylene naphthalate (PEN) polymer available from Teijin.

S-2 553 5/32 SG37 is a chopped fiberglass available from AGY.

Aluminum A-6061 substrates (NMT-treated aluminum coupons) were obtained from Taiseiplas.

### Preparation and Composition of Glass Fiber-Reinforced Compositions

Three examples, summarized in Table 1, were produced via an extrusion process described below. The polymeric ingredients along with stabilizers and/or colorants were tumble blended for 30 minutes in a 5 gallon drum. The pre-mixed blend was fed into the feed throat of a 26 mm diameter Coperion ZSK-26 twelve-barrel co-rotating partially-intermeshing twin-screw extruder. The glass fibers were fed into the premixed blend during extrusion and the extrudate was stranded from the die, cooled in air and water, and then pelletized for convenient handling.

The polyester polymer compositions of the example and comparative examples are shown below in Table 1. The glass transition temperature (T_{g}) for each compound was measured using differential scanning calorimetry (DSC) according to ASTM D3418.

**Table 1: Polyester polymer compositions**

| | **C1** | **C2** | **E3** |
|---|---|---|---|
| AvaSpire ® PAEK | 70 | | |
| Susteel® SGX-115 PPS | | 100 | |
| Polyethylene naphthalate (PEN) | | | 70 |
| Glass Fiber | 30 | 15† | 30 |
| Stabilizers and colorants (pph) | <3 | N/A | 0.2 |
| | | | |
| T_{g} (°C) | 150 | 85 | 120 |
| Melt Compounding Temperature (°C) | 380-390 | N/A | 320-330 |

| | | | |
|---|---|---|---|
| * Polyester polymer composition components are shown in wt.% based on the total weight of the polyester polymer composition unless otherwise indicated. N/A indicates the information was not available. † Susteel® SGX-115 PPS already includes 15 wt.% glass fiber as sold. | | | |

### Adhesion Testing of Compounds to NMT-Treated Aluminum

Over-molded lap shear specimens were used to quantify the degree of adhesion of each of the polyester polymer compositions to 4.5 mm long x 1.75 mm wide x 2 mm thick chemically etched (NMT-treated) A-6061 aluminum coupons obtained from Taiseiplas Corp. A small rectangular bar specimen of polymer was over-molded onto the aluminum coupons using a three-plate mold manufactured and supplied by Taiseiplas Corp. The rectangular strip of plastic over-molded onto the aluminum coupons was nominally 4.5 cm long x 1.0 cm wide x 3.0 mm thick. The plastic piece was over-molded onto the aluminum coupons such that there was a mating or overlap area between the two pieces defined by nominal dimensions of 100 mm x 5 mm thus providing a nominal lap shear junction area of 50 mm². The mold temperature (T_{mold}) employed during each over-molding set is shown in Table 2 below.

The over-molded aluminum/plastic assembly was tested for lap shear strength in an Instron® tensile testing apparatus following the guidelines of ASTM D1002. A positioning fixture supplied by Taiseiplas was also used to hold the assembly in place in the Instron® grips and to maintain the alignment of the metal and plastic pieces during the tensile pull on the two materials to assure that the force applied on the lap interface of the plastic-metal junction was a purely shear force. A pull rate of 0.05 in/min was used, and the lap shear strength of each specimen was calculated by dividing the load needed to break apart each over-molded assembly by the nominal overlap area of the joint (50 mm²). The lap shear strength is also referred to as the adhesion strength of the plastic to the metal substrate.

**Table 2: Adhesion Strength Test Results**

| **T_{mold} - T_{g} (°C)** | **Adhesion Strength (MPa)** | | |
|---|---|---|---|
| | **C1** | **C2** | **E3** |
| 55 | 32.6 ± 5.2 | - | - |
| 45 | 24.2 ± 4.0 | 29.9 ± 5.5 | - |
| 40 | 18.2 ± 6.8 | - | 30.0 ± 2.7 |
| 30 | 9.8 ± 6.5 | - | - |
| 20 | - | - | 29.1 ± 2.6 |
| 15 | 7.8 ± 5.1 | - | - |
| 10 | 6.6 ± 3.0 | 4.3 ± 4.0 | 29.8 ± 2.9 |

| | | | |
|---|---|---|---|
| * ± indicates 1 standard deviation in the measurement using a minimum of 3 replicates. | | | |

Examples C1 and C2 illustrate the typical adhesion behavior for polymer compounds. At high mold temperatures, ≥40°C above the T_{g}, high adhesion levels are observed (≥20 MPa). However, as mold temperature decreases and approaches the T_{g}, the adhesion strength greatly reduces to a value of ∼5 MPa. By contrast, example E3 surprisingly shows almost no reduction in adhesion strength between mold temperatures of T_{g} + 40°C and T_{g} + 10°C, thus maintaining excellent adhesion (∼30 MPa) across this range.

Should the disclosure of any patents, patent applications, and publications which are incorporated herein by reference conflict with the description of the present application to the extent that it may render a term unclear, the present description shall take precedence.

## Claims

1. A polymer-metal junction comprising a polyester polymer composition in contact with a metal substrate,
wherein the polyester polymer composition comprises:
(i) at least one naphthalate polyester comprising more than 50 mol% of repeat units (R_{NP}) of formula : 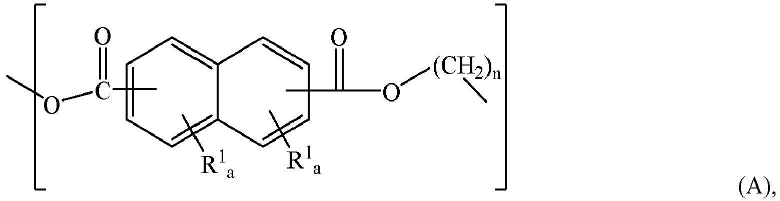 wherein:
each R¹ is independently selected at each occasion from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium,
each a is independently selected at each occasion from integers ranging from 0 to 4, and
n is selected from integers ranging from 2 to 6; and
(ii) optionally at least one reinforcing filler; and
further wherein the metal substrate includes a structured metal surface in contact with the polyester polymer composition.

2. The polymer-metal junction of claim 1, wherein the repeat units (R_{NP}) are repeat units of formula : 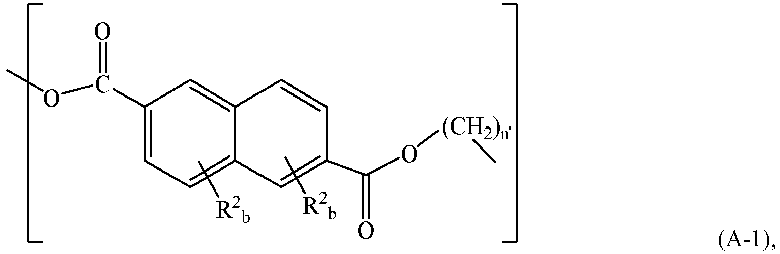 wherein:
each R² is independently selected at each occasion from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium,
each b is independently selected at each occasion from integers ranging from 0 to 4, and
n' is selected from integers ranging from 2 to 6.

3. The polymer-metal junction of any one of claims 1 and 2, wherein the repeat units (R_{NP}) are repeat units of formula : 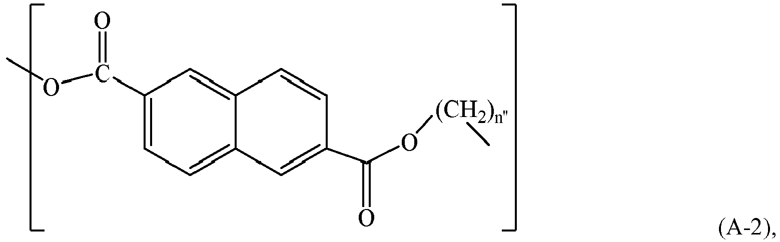 wherein n" is selected from integers ranging from 2 to 6.

4. The polymer-metal junction of any one of claims 1 to 3, wherein the naphthalate polyester is a polybutylene naphthalate (PBN) of formula :

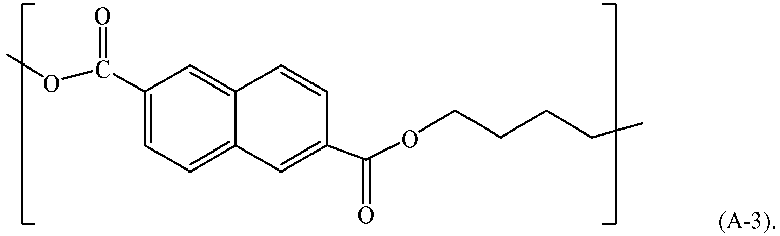

5. The polymer-metal junction of any one of claims 1 to 3, wherein the naphthalate polyester is a polyethylene naphthalate (PEN) of formula :

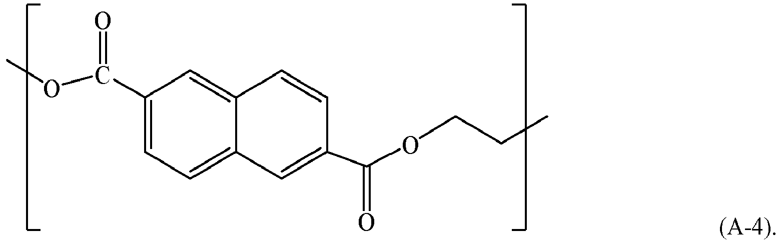

6. The polymer-metal junction of any one of claims 1 to 5, wherein the polyester polymer composition comprises a reinforcing filler.

7. The polymer-metal junction of claim 6, wherein the reinforcing filler is a fibrous reinforcing filler, preferably glass fiber.

8. The polymer-metal junction of any one of claims 1 to 7, wherein the metal substrate comprises copper, steel, aluminum, or a combination thereof, preferably aluminum.

9. The polymer-metal junction of any one of claims 1 to 8, wherein the structured metal surface is a nano-structured metal surface, preferably an NMT-treated metal surface.

10. The polymer-metal junction of any one of claims 1 to 9, wherein the polymer-metal junction exhibits an adhesion strength measured according to the Examples of at least 20 MPa, preferably at least 25 MPa.

11. A method of making the polymer-metal junction of any one of claims 1 to 10, comprising contacting the structured metal surface of the metal substrate with the polyester polymer composition.

12. The method of claim 11, wherein the polyester polymer composition is molded at a mold temperature not greater than 40°C, preferably not greater than 35°C, greater than the glass transition temperature (Tg) of the polyester polymer composition, wherein the glass transition temperature (T_{g}) is measured by differential scanning calorimetry (DSC) according to ASTM D3418.

13. A shaped article comprising the polymer-metal junction of any one of claims 1 to 10.

14. The shaped article of claim 13, wherein the shaped article is a component of a mobile electronic device, preferably a component of a mobile electronic device structural part or housing.

15. A mobile electronic device comprising the polymer-metal junction of any one of claims 1 to 10, preferably in a structural part or housing of the mobile electronic device.
